# EUROPEAN PATENT SPECIFICATION

(11) **EP 1 393 610 B1**
(45) Date of publication and mention of the grant of the patent: **09.08.2006**
(21) Application number: 03255420.6
(22) Date of filing: 29.08.2003
(51) Int. Cl.: A01D 34/00, F24F 13/08

(54) **Improved airborne lawnmower and self-cleaning extraction system**
Verbesserter luftgetragener Rasenmäher und selbstreinigende Entlüftungsanlage
Tondeuse à gazon à coussin d'air améliorée et système d'extraction auto-nettoyant

(30) Priority: 31.08.2002 GB 0220310
(43) Date of publication of application: 03.03.2004
(73) Proprietor: Douglas, Craig, Lenzie, Glasgow G66 5HZ (GB)
(72) Inventor: Douglas, Craig, Lenzie, Glasgow G66 5HZ (GB)
(74) Representative: McKechnie, Neil Henry

(56) References cited:
- GB-A- 2 343 607
- US-A- 3 091 906
- US-A- 4 407 112
- US-A- 4 905 461
- US-A- 5 609 011

## Description

This invention relates to self cleaning extraction systems. In particular it relates to an extraction or ventilation system that is able to prevent the build up of debris on its surfaces. It also relates to lawn mowers that are able to prevent the build up of debris on is internal surfaces within the extraction system.

There are many different types of air extraction, ventilation or flue systems that are used in industry and in a range of products. These include systems that are required in industrial and commercial processes for the drawing in of air either for ventilation or clean air systems; exhaust systems; and lawnmowers that use air to draw grass cuttings up into the mower

There are three main types of lawn mower presently described in the Prior Art. The first relate to lawn mowers having a cylindrical cutting unit that includes a plurality of blades and which, in operation, rotate about a substantially horizontal axis. The second relate to lawn mowers that comprise a cutting blade that rotates about a vertical axis and where the motion of the device is enabled by the provision of wheels. The third relate to hover-type lawn mowers which, when operative, are supported by a cushion of air and include a cutting blade which again rotates about a vertical axis. All three types of lawn mowers are typically housed within a hood. Additionally, all of these types of lawn mower may incorporate means for collecting grass cuttings.

An indicative disadvantage of the aforementioned type of lawn mowers is their tendency to accumulate grass cuttings on the under side of the hood. This is particularly problematic in the hover-type lawn mower where the efficiency of the device depends on the free flow of the pressurised air so as to maintain the ease with which the device can be swept over the area of grass being cut. Such an accumulation of grass cuttings on the underside of the hoods results in a decrease of the efficiency of such hover-type mowers and significant increases in down time when the user is required to stop the grass cutting process so as to clear the debris.

US Patent No. 3,091,906 in the name Hall describes a rotary mower which uses a flat plate with scalloped ports to generate a cyclonic flow of air parallel to and across the plate. This is intended to generate a curtain of airflow to prevent grass cuttings from travelling upwards to collect on the underside of the plate.

Similar problems occur with ventilation and exhaust systems. Typically the systems are drawing air which contains impurities or debris up through a channel, and the walls of the channel often become clogged. The results in downtime being required for cleaning out the deposits. In many cases to clean out the deposits it is necessary to have manual access to confined spaces and there are major risk factors associated with the clean up process in cases where hazardous materials are present in the build up. US-A-6135129 describes an air intake passage cleaning method.

It is an object of at least one aspect of the present invention to provide a system that assists in overcoming some of the problems described above.

According to a first aspect of the present invention there is provided a self cleaning extraction system wherein the extraction system comprises at least one wall defining at least one part of the system, the wall comprising a first and a second skin oriented so as to define an air channel, a plurality of vent ports incorporated on the first skin and a first impeller situated on a first side of the first skin, wherein the first impeller provides a source of air pressure that is directed through the air channel and the plurality of vent ports so as to prevent the build up of debris on a second side of the first skin.

Most preferably the system comprises a second impeller for drawing air into the system, the second impeller being situated on the second side of the first skin.

According to a second aspect of the present invention there is provided a hover-type mower comprising a hood formed from a first skin section and a second skin section orientated so as to define an air channel, a plurality of vent ports located within the first skin section, and a first impeller situated on a first side of the first skin section, wherein the first impeller provides for a secondary pressurised airflow to be generated and passed through the air channel and the plurality of vent ports so as to prevent the build up of debris on a second side of the first skin
characterised in that
the vent ports are orthogonal to the second side of the first skin section such that the secondary pressurised airflow cooperates with a pressurised air flow of the mower employed to allow the mower to hover.

Preferably the lower skin section defines a cutting area for the hover-type mower.

Preferably the cutting area comprises a grass cutting means and a second impeller.

Most preferably the second impeller provides a pressurised airflow sufficient to allow the mower to hover.

Preferably the hover-type mower further comprises an air inlet wherein the air inlet allows for air to pass through the upper skin section into the air channel.

Preferably the hover-type mower further comprises a motor wherein the motor controls the operation of the first impeller, the second impeller and the grass cutting means.

Embodiments of the invention will now be described, by way of example only, with reference to the accompanying drawings, in which:
- Figure 1: present a schematic representation of a double skinned hover mower in accordance with an aspect of the present invention; and
- Figure 2: presents a bottom view of the hover mower of Figure 1; and
- Figure 3: presents a schematic representation of a ventilation system according to the present invention.

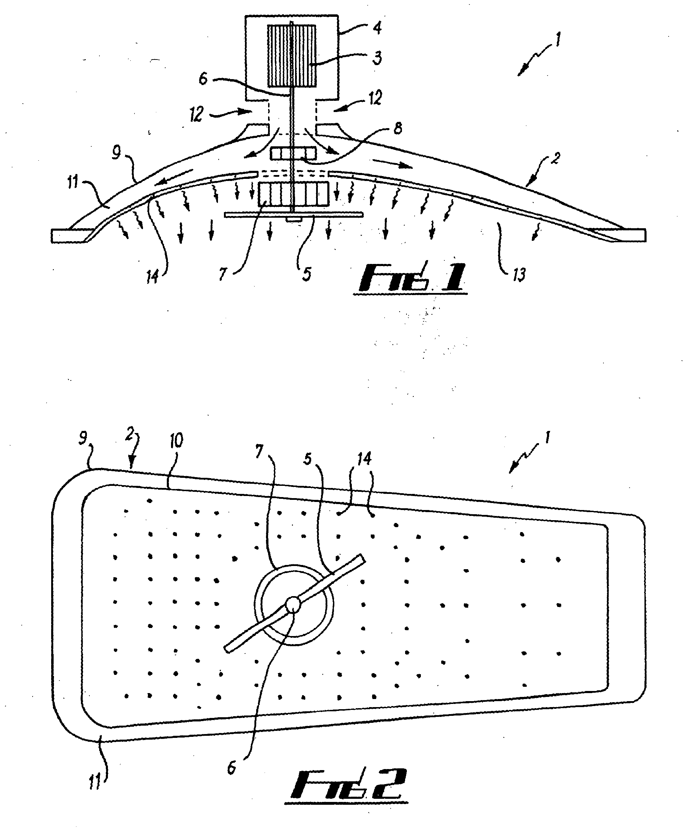

Figure 1 presents a double skinned hover mower 1 in accordance with an aspect of the present invention. The hover mower 1 can be seen to comprise a double skinned hood 2, a motor 3 housed within a motor housing 4, a cutting blade 5 and a drive shaft 6 that connects the motor 3 and the cutting blade 5. Mounted on the drive shaft 6 is a primary 7 and a secondary impeller 8 employed to generate the pressurised airflow required to operate the device.

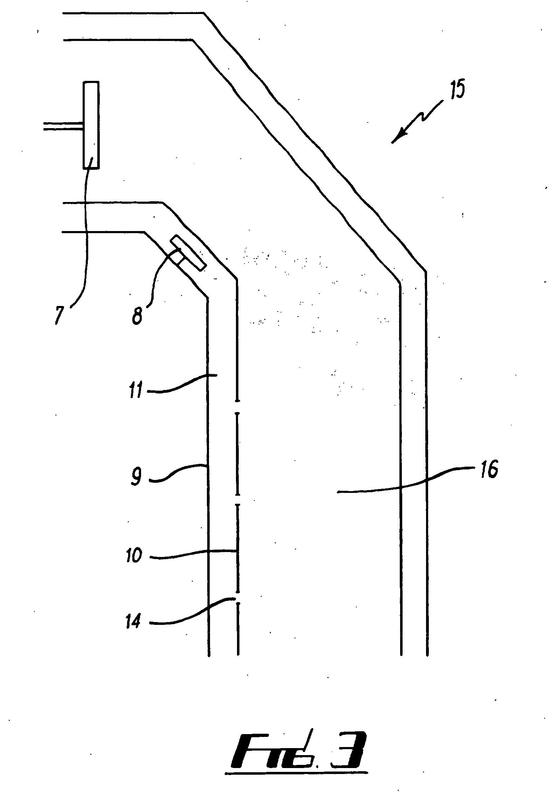

Figure 2 presents further detail of the double skinned hood 2. The doubled skinned hood can be seen to comprise an upper 9 and lower skin section 10 between which is defined an air channel 11. The upper skin section 9 comprises an annular air inlet 12 and resembles the more traditional style of hood typically found in hover type mowers. However, it is the lower skin section 10 that defines a cutting area 13 of the hover mower 1. The lower skin section 10 also incorporates a plurality of vent ports 14 that allow for a controlled flow of air pressure through the lower skin section 10 from the air channel 11 into the cutting area 13.

A key feature to the operation of the hover mower 1 is the location of the primary 7 and secondary impellers 8. The secondary impeller 8 is located within the air channel 11 while the primary impeller 7 is located within the cutting area 13, as can be seen from Figure 1. The primary impeller 7 acts under the control of the motor 3 so as to provide a downward air pressure within the cutting area 13 so as to allow the mower 1 to hover.

Simultaneously, the secondary impeller 8, again acting under the control of the motor 3, provides a second source of air pressure. This air pressure is primarily directed through the air channel 11. While traversing the air channel 11 the vent ports 14 allow for the secondary air pressure to pass through into the cutting area 13. Therefore, this secondary air flow acts to prevent the build up of any debris on the inner surface of the lower skin section 10 while simultaneously dislodging any such debris that may have collected.

It will be obvious to one skilled in the art that the number of vent ports employed and there spacing may be varied. Therefore different patterns of vent ports may readily be incorporated with differed designs of hover mowers so as to optimise the efficiency of the device.

A significant advantage of an aspect of the present invention is that it provides a hover-type lawn mower that incorporates a double skinned hood. This hood provides a means for allowing secondary airflow to be directed into the cutting area so as to significantly reduces the level of debris formation on the underside of the hood thereby increasing the efficiency of the mower. These features also provide a further advantage in that they act to significantly reduce the periods of down time normally associated with the cleaning requirements for hover-type mowers.

A second embodiment of the invention can be seen in figure 3. Here there is a ventilation system 15 that draws air into a ventilation shaft 16. The walls of the shaft are double skinned, comprising an inner skin section 10 and outer skin section 9, between which is an air channel 11. The inner skin section 10 defines the inner wall of the ventilation shaft 16 and incorporates a plurality of vent ports 14 that allow a flow of air from the air channel 11 into the ventilation shaft 16. An important feature of the system 15 is that there is a first impeller 7 in the ventilation shaft 16 that draws air into the system. There is also a second impeller 8 provided in the air channel 11. The second impeller 8 provides a second source of air pressure that is primarily directed through the air channel 11. This results in the air passing through the vent ports 14 from the air channel 11 into the ventilation shaft 16, and this air flow prevents the build up of debris on the inner surface of the inner skin 10, whilst simultaneously dislodging any such build up that may have collected.

The foregoing description of the invention has been presented for purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention herein intended.

## Claims

1. A self cleaning extraction system (15) wherein the extraction system comprises at least one wall defining at least one part of the system (15), **characterized in that** the wall comprises a first (10) and a second (9) skin oriented so as to define an air channel (11), a plurality of vent ports (14) incorporated on the first skin (10) and a first impeller (8) situated on a first side of the first skin (10), wherein the first impeller (8) provides a source of air pressure that is directed through the air channel (11) and the plurality of vent ports (14) so as to prevent the build up of debris on a second side of the first skin (10).

2. A self-cleaning extraction system (15) as claimed in Claim 1 wherein the system comprises a second impeller (7) for drawing air into the system (15), the second impeller (7) being situated on the second side of the first skin (10).

3. A hover-type mower (1) comprising a hood (2) formed from a first skin section. (10) and a second skin section (9) orientated so as to define an air channel (11), a plurality of vent ports (14) located within the first skin section (10), and a first impeller (8) situated on a first side of the first skin section (10), wherein the first impeller provides for a secondary pressurised airflow to be generated and passed through the air channel (11) and the plurality of vent ports (14) so as to prevent the build up of debris on a second side of the first skin (10)
**characterised in that**
the vent ports (14) are orthogonal to the second side of the first skin section (10) such that the secondary pressurised airflow cooperates with a pressurised air flow of the mower (1) employed to allow the mower (1) to hover.

4. A hover-type mower (1) as in Claim 3 wherein the first skin section (10) defines a cutting area (13) for the hover-type mower (1).

5. A hover-type mower (1) as in Claim 4 wherein the cutting area (13) comprises a grass cutting means (5) and a second impeller (7).

6. A hover-type mower (1) as in Claim 5 wherein the second impeller (7) provides the pressurised air flow so as to allow the mower (1) to hover.

7. A hover-type mower (1) as in Claims 3-6 wherein the hover-type mower (1) further comprises an air inlet (12) wherein the air inlet (12) allows for air to pass through the upper skin section (9) into the air channel (11).

8. A hover-type mower (1) as in Claims 3-7 wherein the hover-type mower (1) further comprises a motor (3) wherein the motor (3) controls the operation of the first impeller (8), the second impeller (7) and the grass cutting means (5).

## Patentansprüche

1. Selbstreinigendes Abzugssystem (15), wobei das Abzugssystem wenigstens eine Wand umfasst, die wenigstens einen Teil des Systems (15) definiert, **dadurch gekennzeichnet, dass** die Wand Folgendes umfasst: eine erste (10) und eine zweite (9) Haut, die so ausgerichtet sind, dass sie einen Luftkanal (11) definieren, eine Mehrzahl von an der ersten Haut (10) vorhandenen Luftlöchern (14) und ein erstes Laufrad (8), das sich auf einer ersten Seite der ersten Haut (10) befindet, wobei das erste Laufrad (8) eine Quelle von Luftdruck bereitstellt, der durch den Luftkanal (11) und die Mehrzahl von Luftlöchern (14) geleitet wird, um das Ansammeln von Schmutz auf einer zweiten Seite der ersten Haut (10) zu verhindern.

2. Selbstreinigendes Abzugssystem (15) nach Anspruch 1, wobei das System ein zweites Laufrad (7) zum Einsaugen von Luft in das System (15) umfasst, wobei sich das zweite Laufrad (7) auf der zweiten Seite der ersten Haut (10) befindet.

3. Luftkissenmäher (1), der Folgendes umfasst: eine Haube (2), die aus einem ersten Hautabschnitt (10) und einem zweiten Hautabschnitt (9) gebildet ist, die so ausgerichtet sind, dass sie einen Luftkanal (11) definieren, eine Mehrzahl von in dem ersten Hautabschnitt (10) befindlichen Luftlöchern (14) und ein erstes Laufrad (8), das sich auf einer ersten Seite des ersten Hautabschnitts (10) befindet, wobei das erste Laufrad dafür sorgt, dass eine sekundäre Druckluftströmung erzeugt und durch den Luftkanal (11) und die Mehrzahl von Luftlöchern (14) hindurchgeführt wird, um das Ansammeln von Schmutz auf einer zweiten Seite der ersten Haut (10) zu verhindern,
**dadurch gekennzeichnet, dass** die Luftlöcher (14) zur zweiten Seite des ersten Hautabschnitts (10) orthogonal sind, sodass die sekundäre Druckluftströmung mit einer Druckluftströmung des Mähers (1) zusammenwirkt, die eingesetzt wird, um den Mäher (1) schweben zu lassen.

4. Luftkissenmäher (1) nach Anspruch 3, bei dem der erste Hautabschnitt (10) einen Schnittbereich (13) für den Luftkissenmäher (1) definiert.

5. Luftkissenmäher (1) nach Anspruch 4, bei dem der Schnittbereich (13) ein Grasschneidmittel (5) und ein zweites Laufrad (7) umfasst.

6. Luftkissenmäher (1) nach Anspruch 5, bei dem das zweite Laufrad (7) die Druckluftströmung zum Schwebenlassen des Mähers (1) erzeugt.

7. Luftkissenmäher (1) nach einem der Ansprüche 3 bis 6, wobei der Luftkissenmäher (1) ferner einen Lufteinlass (12) umfasst, wobei der Lufteinlass (12) Luft durch den oberen Hautabschnitt (9) in den Luftkanal (11) passieren lässt.

8. Luftkissenmäher (1) nach einem der Ansprüche 3 bis 7, wobei der Luftkissenmäher (1) ferner einen Motor (3) umfasst, wobei der Motor (3) den Betrieb des ersten Laufrads (8), des zweiten Laufrads (7) und des Grasschneidmittels (5) steuert.

## Revendications

1. Système d'extraction autonettoyant (15) dans lequel le système d'extraction comprend au moins une paroi définissant au moins une partie du système (15), **caractérisé en ce que** la paroi comprend une première peau (10) et une deuxième peau (9) orientées de manière à définir une conduite d'air (11), une pluralité d'évents (14) intégrés dans la première peau (10) et une première roue (8) située sur un premier côté de la première peau (10), dans lequel la première roue (8) fournit une source de pression d'air qui est dirigée à travers la conduite d'air (11) et la pluralité d'évents (14) de manière à empêcher l'accumulation de débris sur un deuxième côté de la première peau (10).

2. Système d'extraction autonettoyant (15) suivant la revendication 1, dans lequel le système comprend une deuxième roue (7) pour aspirer de l'air dans le système (15), la deuxième roue (7) étant située sur le deuxième côté de la première peau (10).

3. Tondeuse sur coussin d'air (1) comprenant un capot (2) formé à partir d'une première section de peau (10) et une deuxième section de peau (9) orientées de manière à définir une conduite d'air (11), une pluralité d'évents (14) situés à l'intérieur de la première section de peau (10) et une première roue (8) située sur un premier côté de la première section de peau (10), dans laquelle la première roue permet qu'un écoulement d'air sous pression secondaire soit généré et traverse la conduite d'air (11) et la pluralité d'évents (14) de manière à empêcher l'accumulation de débris sur un deuxième côté de la première peau (10);
**caractérisée en ce que**
les évents (14) sont orthogonaux par rapport au deuxième côté de la première section de peau (10) de sorte que l'écoulement d'air sous pression secondaire coopère avec un écoulement d'air sous pression de la tondeuse (1) utilisé pour permettre que la tondeuse (1) flotte dans l'air.

4. Tondeuse sur coussin d'air (1) suivant la revendication 3, dans laquelle la première section de peau (10) définit une zone de coupe (13) pour la tondeuse sur coussin d'air (1).

5. Tondeuse sur coussin d'air (1) suivant la revendication 4, dans laquelle la zone de coupe (13) comprend un moyen pour couper l'herbe (5) et une deuxième roue (7).

6. Tondeuse sur coussin d'air (1) suivant la revendication 5, dans laquelle la deuxième roue (7) fournit l'écoulement d'air sous pression de manière à permettre que la tondeuse (1) flotte dans l'air.

7. Tondeuse sur coussin d'air (1) suivant les revendications 3 à 6, dans laquelle la tondeuse sur coussin d'air (1) comprend en outre une admission d'air (12) dans laquelle l'admission d'air (12) permet à l'air de passer à travers la section de peau supérieure (9) dans la conduite d'air (11).

8. Tondeuse sur coussin d'air (1) suivant les revendications 3 à 7, dans laquelle la tondeuse sur coussin d'air (1) comprend en outre un moteur (3) dans laquelle le moteur (3) commande le fonctionnement de la première roue (8), de la deuxième roue (7) et du moyen pour couper l'herbe (5).
